# EUROPEAN PATENT APPLICATION

(11) **EP 4 741 828 A1**
(43) Date of publication of application: **13.05.2026**
(21) Application number: 24211628.3
(22) Date of filing: 08.11.2024
(51) Int. Cl.: G01N 35/00, G01N 35/04

(54) **LABORATORY DEVICE FOR PROCESSING OF PATIENT SAMPLES AND METHOD OF OPERATING A LABORATORY DEVICE FOR PROCESSING OF PATIENT SAMPLES**

(71) Applicant: Immunodiagnostic Systems France SAS, 21320, Pouilly-en-Auxois (FR)
(72) Inventor: VIÉ, Romain, 21320, Pouilly-en-Auxois (FR); PIRES, Sylvie, 21320, Pouilly-en-Auxois (FR); SEGUIN, Richard, 21320, Pouilly-en-Auxois (FR)

(57) **Abstract**

Proposed is a laboratory device for processing of patient samples comprising a portable scanning unit for scanning a code of a consumable container and furthermore 'for providing provide a data signal indicating the code, multiple container slots, each of the container slots operable to hold a respective consumable container and furthermore comprising a respective associated sensor. Each container slot is associated with a specific consumable type. Each sensor is operable to provide a respective sensor signal indicating a potential presence of a respective container in the container slot associated to the sensor. A processing unit is operable to determine a scanned consumable type based on the code and furthermore to determine, based on the scanned consumable type and the sensor signals, whether the scanned consumable type matches a specific consumable type associated with that container slot, into which a consumable container has been lastly placed.

## Description

The invention is directed to a laboratory device for processing of patient samples and a method of operating a laboratory device for processing of patient samples.

Laboratory devices, in particular automatic laboratory devices, are well known for the purpose of processing of patient samples using an assay kit. Such an assay kit comprises one or more reagents, preferably liquid reagents, wherein at least one of the reagents comprises biological molecules such as nucleic acids, peptides, polypeptides, for example antigens or antibodies. The components of the assay kit are processed on the device together with a patient sample. This processing is carried out for detecting or capturing an antibody or an antigen - or in particular a strand of a deoxyribonucleic acid or of a ribonucleic acid - that potentially is present within the patient sample. The patient sample is preferably a liquid patient sample, in particular in the form of blood, serum, urine, semen, CSF or saliva.

The processing of the patient sample using the assay kit may apply one or more of the techniques from the following list: Chemiluminescence immunoassay (ChLIA), Enzyme-Linked Immunosorbent Assay (ELISA), Indirect Immunofluorescence Test (IIFT), Immunoblot, Polymerase Chain Reaction (PCR).

For the processing of the patient sample and the assay kit, pipetting devices may be used on the laboratory device for dispensing and/or aspirating reagent liquids and/or the liquid patient samples into a reaction vessel or out of the reaction vessel.

Typically, a specific assay kit comprises specific components that are specific for capturing/detecting a specific antibody or a specific antigen - or in particular a specific strand of a deoxyribonucleic acid - potentially present within the patient sample. Therefore, a specific assay kit may be used for aiding a clinician in handling a specific diagnostic task or question. For processing the patient sample together with the assay kit, further components not comprised within the assay kit may be used on the laboratory device. Such components are so-called consumable components or consumables. A consumable may be a so-called ancillary reagent or a reagent vessel. An ancillary reagent may in particular an ancillary reagent liquid. Examples of ancillary reagents as consumables are washing liquids, in particular for washing pipette needles, or buffer liquid, in particular for diluting a liquid patient sample. Such ancillary reagents are not specific when aiming for the task of capturing/detecting a specific antibody or a specific antigen - or in particular a specific strand of a deoxyribonucleic acid - potentially present within the patient sample and therefore may be used for a variety of different assay kits.

Within a laboratory device for processing of patient samples, consumables in the form of ancillary reagents or reagent vessels may be provided via respective consumable containers comprising the respective consumables. The containers are placed within respective container slots of the laboratory device. A laboratory device may for example make use of a liquid ancillary reagent comprised within the consumable container via a pipe system and a pump that extracts portions of the reagent liquid and transports the portion into a reaction vessel. The overall volume of a reagent liquid present within a consumable container is typically much larger than the individual volume of an individual portion of the reagent liquid necessary for processing a specific patient sample together with one specific assay kit. Thus, during operation of the laboratory device within a laboratory environment, replacing the consumable container before it is empty by a new consumable container is a task to be carried out by a user or laboratory personnel working in the laboratory environment. Processing one specific processing assay kit together with one specific patient sample usually takes place within one specific reagent vessel. A consumable container comprising consumables in the form of reagent vessels may thus also be placed within a container slot, wherein the laboratory device may comprise a picking device that is able to extract one individual reagent vessel out of the consumable container.

In particular, a laboratory device comprises multiple container slots, wherein each container slot may be associated with a specific, different consumable type. Since multiple, different consumables, in particular multiple, different ancillary reagent liquids, have to be provided via respective consumable containers within respective container slots of the laboratory device, a correct placement of consumable containers within respective container slots has to be insured. Correct placement is a major issue for ensuring proper processing of the assay kit together with the patient sample and for avoiding false results. In particular, at least two of the container slots may have a same geometry. Thus, misplacement of two different consumable containers comprising different consumable types into the container slots may occur.

Typically, a consumable container comprises a code placed on the container or attached to the container. Such a code may be simple letters representing the name of the consumable type, a QR code, a barcode, a consumable type number or another type of a code.

Usually, it is a task within the laboratory environment for the user to identify via inspection of the code, preferably being an optical code placed on the container, or another type of label/information placed on the container the consumable type of the consumable contained within the container and then next to decide, into which specific container slot the specific consumable container comprising a specific consumable type should be placed.

It is a task of the present invention to reduce the risk of misplacement of different consumable containers with different consumables of different consumable types into the container slots of the laboratory device.

Proposed herein is a laboratory device for processing patient samples, in particular for processing of patient samples using assay kits and consumables. The laboratory device comprises a portable scanning unit that is operable to scan a code of a consumable container and to provide a data signal indicating the code. A laboratory device comprises multiple container slots. Each of the container slots are operable to hold a respective consumable container and each of the container slots comprises a respective associated sensor. Each container slot is associated with a specific consumable type. Each sensor is operable to provide a respective sensor signal indicating a potential presence of a respective container in the container slot associated to the sensor.

The laboratory device comprises furthermore a processing unit that is operable to determine a scanned consumable type based on the scanned code. Finally, the processing unit is operable to determine, based on the scanned consumable type and the sensor signals, whether the scanned consumable type matches a specific consumable type that is associated with that container slot, into which a consumable container has been lastly placed.

The proposed laboratory device is able to ensure that the consumable type of the consumable container, from which the code has been scanned, matches with the consumable type that is associated with the container slot into which the consumable container, from which the code has been scanned, has been lastly placed. Thus, the laboratory device is able to reduce the risk of misplacement of containers comprising consumable types that should not be placed into that container slot into which a container has been lastly placed. Thus, misplacement of a consumable container of a specific consumable type into a wrong container slot may be avoided.

The processing unit is in particular operable to determine/identify, based on the sensor signals, into which container slot a consumable container has been lastly placed. Therefore, the processing unit is in particular operable to determine, based on the scanned consumable type and the determined/identified slot, whether the scanned consumable type matches a specific consumable type that is associated with that container slot, into which a consumable container has been lastly placed. In other words: the processing unit is in particular operable to determine directly or indirectly based on the scanned consumable type and based on the sensor signals, whether the scanned consumable type matches a specific consumable type that is associated with that container slot, into which a consumable container has been lastly placed.

Preferably, at least two of the container slots have a same geometry. In particular, at least two of the container slots comprise a same geometry in sense that consumable containers placed within these two container slots also share a same geometry.

The processing unit is furthermore operable to determine whether the actions of
- scanning the code of the consumable container comprising a specific consumable type
- and placing the consumable container in the container slot
are carried out in an order that is mandatory for the scanned consumable type. For this task, a preferable step of providing, in particular to the processing unit, respective mandatory orders for respective consumable types may be carried out. In a preferred embodiment, a step of providing a data element, in particular to the processing unit, may be carried out, wherein the data element indicates respective mandatory orders for respective consumable types.

Since some containers may have a same geometry but may contain different consumable types, the risk of misplacement may be further reduced for consumable types for which misplacement may be more severe. In this case, a mandatory order of the above-mentioned actions may be provided to the processing unit in the form of a data element, preferably via a data interface or via a memory unit.

The processing unit may then ensure, that a user or a laboratory personnel in a first action scans the code of the consumable container using the portable scanning unit and then in a next following, second step places the container in the container slot. By this, it may be ensured that the user or laboratory personnel may hold the container in his or her hand when using the scanning unit and thus having the container right in front of him or her and thus may also visually identify the consumable type that is indicated by the code or other information placed next to the code on the container. Therefore, the user or laboratory personnel may be aware, which type of consumable is comprised within that specific consumable container. By this, it may be achieved that the user or laboratory personnel is more aware of which type of consumable will be placed via the specific consumable container into the container slot chosen by the user or laboratory personnel. By this, misplacement risk may be further reduced.

For at least one specific consumable type, it may be the case that only one specific single slot with a single, specific geometry is provided/available at the device. In other words, the laboratory device may comprise one container slot that has a specific geometry, which differs from all the other geometries of all other container slots. Thus, misplacement is less likely to occur for such a specific consumable type. For such a specific consumable type, the above-mentioned actions of scanning the code and placing the container in the slot may also be carried out in another order, namely in a first step of placing the consumable container in a container slot and then as a next following, second step scanning the code of the consumable container comprising the consumable type. For such a specific consumable type, the user or laboratory personnel may be less aware of the question, which consumable type is placed in the container slot via the consumable container he/her places it in the slot via the specific container, since scanning of the code has not yet occurred. Such an unawareness is less severe, since only one single available container slot of proper geometry is given at the laboratory device. Therefore, the order of in a first step scanning the code and then in a second step placing the consumable container in the slot does not have to be mandatory for such a specific consumable type.

By allowing two different orders of the mentioned actions of scanning the code and placing the consumable container, the work of the user or the laboratory personnel may become less cumbersome, since for some - rather critical - consumable types misplacement risk may be reduced by demanding the mandatory order of first scanning the code and then next placing the container in the slot. For other consumable types, at first direct placement of the container in a container slot and then next a scanning may be allowed.

Preferably, data indicating specific mandatory orders of the actions of scanning the code and placing the consumable container in a container slot may be provided as a data element, preferably by ae memory unit. Preferably, the processing unit is furthermore operable to determine, based on the scanned consumable type and the sensor signals, whether a placement of a consumable container containing the scanned consumable type is allowable or possible. A placement of a container comprising a consumable of the scanned consumable type is not allowable or not possible if the container slot associated with the scanned consumable type is occupied by a container.

Preferably, the code is an identification code. An identification code is preferably a code element allowing derivation of coded data.

Preferably, the scanning unit is an optical scanning unit and the code is an optical code readable via said optical scanning unit, in particular via reception of visible light by the optical scanning unit.

Preferably the scanning unit is a scanning unit using transmission and reception of electromagnetic radiation for reading said code, wherein the code is a code element readable via electromagnetic radiation, wherein furthermore more preferably the electromagnetic radiation is not visible light. The code element is even more preferably an RFID code element or an NFC code element.

Preferably, the processing unit is furthermore operable to issue a warning in the case that the scanned consumable type does not match the specific consumable type associated with the container slot, into which a consumable container has been lastly replaced.

Preferably, the processing unit is furthermore operable to issue a warning message in the case that the actions of scanning the code and placing the consumable container in the container slot are not carried out in an order that is mandatory for the scanned consumable type.

Preferably, the processing unit is furthermore operable to issue a warning message in the case that a placement of a consumable container containing the scanned consumable type is not allowable or not possible.

Preferably, a sensor is a pressure sensor or a floating sensor or an optical sensor.

Preferably, the laboratory device comprises a memory unit, that is operable to provide for each consumable type a respective data element, wherein a respective data element indicates for a respective consumable type at least three different statuses comprising the following statuses:
- a container slot associated with the specific consumable type is empty
- a container slot associated with the specific consumable type contains a consumable container that has not yet been associated to a code
- a container slot associated with the specific consumable type contains a consumable container that has already been associated to a code.

Proposed is furthermore a method of operating a laboratory device comprising different steps. In one step, scanning of a code of a consumable container via a portable scanning unit is carried out by a user. In a further step, a data signal is provided indicating the code. In a further step, multiple container slots are provided at the laboratory device, wherein each of the container slots is operable to hold a respective consumable container and wherein each of the container slots comprises a respective associated sensor, wherein furthermore each container slot is associated with a specific consumable type. In a further step, each sensor provides a respective sensor signal indicating a potential presence of a respective container and the container slot associated to the sensor.

In a further step, a processing unit determines a scanned consumable type based on the code. Preferably, the processing unit determines based on the sensor signals, into which container slot a consumable container has been lastly placed.

The processing unit is furthermore operable to determine, based on the scanned consumable type and the sensor signals, whether the scanned consumable type matches a specific consumable type associated with that container slot, into which a consumable container has been lastly placed.

A consumable may be one of the following: a reagent, in particular a reagent liquid, or a reagent vessel. The reagent may be called an ancillary reagent, in particular an ancillary reagent liquid. A reagent liquid, preferably called ancillary reagent liquid, may be a washing liquid or a processing liquid.

A consumable is in particular a product needed for processing a patient sample on the laboratory device using an assay kit.

In the preferable case that a consumable is an ancillary reagent, then a consumable type may preferably be denoted as an ancillary reagent type. In the preferable case that a consumable is an ancillary reagent liquid, then a consumable type may preferably be denoted as an ancillary reagent liquid type.

The term "patient sample", as used herein, refers preferably to a fluid patient sample (blood, serum, urine, semen, CSF, saliva), or such a diluted fluid patient sample.

In preferred embodiments, the terms "detecting in a sample" and/or "determining in a sample", as used herein, refer to the qualitative or quantitative measurement of a compound or molecule in the patient sample, in particular using a ChLIA technique. In many cases, detecting or determining the presence of a biological compound or biological molecule such as for example an antibody or an antigen, optionally meaning determining whether the concentration of the biological compound or biological molecule such as for example an antibody or an antigen is beyond a certain threshold, preferably as set by measurement using a ChLIA technique carried out by the device.

If the biological compound or biological molecule such as for example an antibody or an antigen can be detected, this will be information instrumental for the clinician's diagnosis and indicates an increased likelihood that the patient suffers from a disease. In a preferred embodiment, the relative concentration of the biological compound or biological molecule such as for example an antibody or an antigen in the patient sample, compared to the level that may be found in the average healthy subject, may be determined by the device.

In the following, the proposed invention is described and outlined making use of specific embodiments without limiting the general invention. This outlining and describing is carried out making use of the following figures showing
- **Fig. 1**: a preferred embodiment of a laboratory device
- **Fig. 2a**: a preferred embodiment of a proposed method
- **Fig. 2b**: a further preferred embodiment of a proposed method
- **Fig. 3**: a preferred embodiment of a status diagram together with input data used in a preferred embodiment of a proposed method
- **Fig. 4**: steps of a further preferred embodiment of a proposed method.

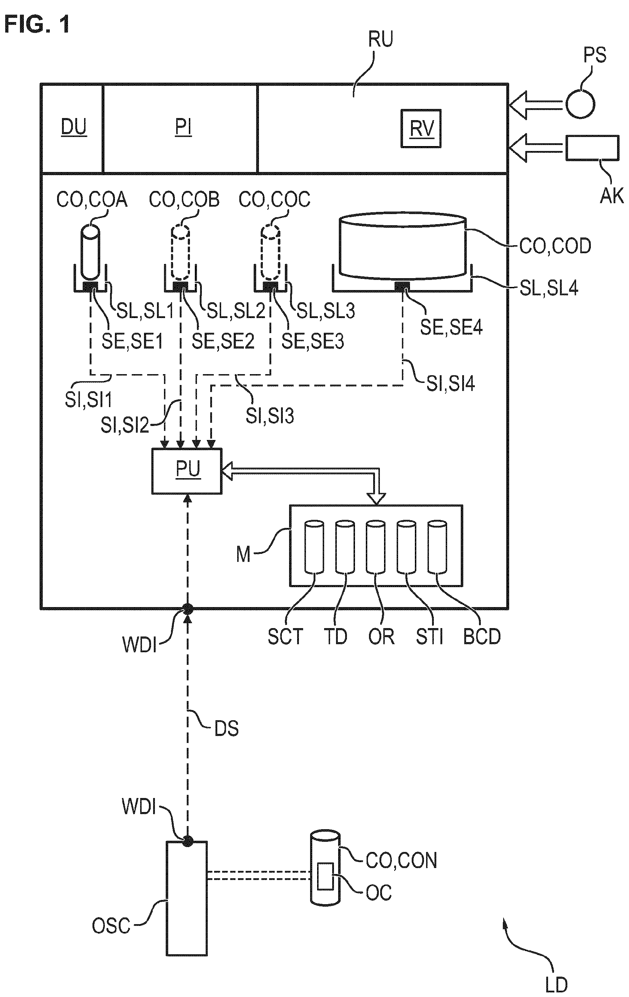

**Fig. 1** shows a laboratory device LD that is operable to process a patient sample PS using components of an assay kit AK, preferably a diagnostic assay kit. For this purpose, the laboratory device LD may comprise a pipetting unit PI and a reaction unit RU. Within the reaction unit RU, a reaction vessel RV may be used for processing the patient sample PS and components of the assay kit AK. Such processing of patient samples using assay kits within a reaction vessel RV of a reaction unit RU are well known from the prior art for the different technologies of ChLIA, Elisa, IIFT, Immunoblot, PCR. The laboratory device LD preferably comprises a display unit DU for issuing warning messages as displaying messages.

The laboratory device LD comprises a portable scanning unit OSC, via which a user may scan a code OC of a consumable container CO. The scanning unit OSC may then provide a data signal DS to the processing unit PU of the laboratory device LD. The portable scanning unit is connected for the purpose of data transmission to the laboratory device LD via wireless data interface WDI or alternatively via a wired data line or a wired data cable.

The laboratory device LD comprises multiple container slots SL. In this example, the laboratory device LD comprises four different container slots SL1, ..., SL4. In this embodiment, the container slots SL1, SL2 and SL3 share a same geometry. Furthermore, in this embodiment the container slot SL4 has a geometry that differs from all other geometries of all other container slots SL1, SL2, SL3. The scanning unit OSC is preferably portable in the sense that a user can move the scanning unit OSC with his/her hands away from a main chassis of the laboratory device.

Each of the container slots SL is operable to hold a respective container CO. In this embodiment as an example, the container slot SL1 holds a respective consumable container COA, while the container slot SL4 holds a container COD. The container COA comprises a consumable type of the type A and the container COD comprises a consumable of the consumable type D. Via dashed lines a possible placement of containers COB and COC within the respective slots SL2 and SL3 is indicated, while actually such containers are not present within the slots SL2 and SL3 at first.

The slots SL1, ..., SL4 comprise respective associated sensors SE in the form of the sensors SE1, ..., SE4. Each of the sensors SE1, ..., SE4 is operable to provide a respective sensor signal SI as the sensor signals SI1, ..., SI4. Each of the sensor signals SI1, ..., SI4 indicates a potential presence of a respective container COA, COB, COC, COD in the container slot SL1, ..., SL4 associated to the respective sensor SE1, ..., SE4.

As previously mentioned, each of the container slots SL1, ..., SL4 is associated with a specific consumable type. In this example, the container slot SL1 is associated with a consumable type of a type A, the container slot SL2 is associated with a consumable of a consumable type B, the container slot of SL3 is associated with a consumable of a consumable type C and the container slot SL4 is associated with a consumable of a consumable of the type D.

For illustrative purposes, one may consider an example, in which a user has to place a new container CON comprising a consumable of consumable type B within the slot SL2. Thus, the user scans the code OC of the container CON via the scanner OSC, that provides the data signal DS to the processing unit PU. The processing unit furthermore makes use of the sensor signals SI and thus is able to determine, into which of the free slots SL2 or SL3 a placement of the container CON is carried out by the user. As an example, the new container CON is placed into the slot SL2. Thus, making use of the sensor signals SI, the processing unit PU is able to determine that it is the slot SL2 into which a consumable container CON has been lastly placed. Then, the processing unit PU determines the scanned consumable type based on the code indicated by the data signal DS. This scanned consumable type may be stored in the memory unit M as data element SCT. Furthermore, making use of the scanned consumable type SCT, the processing unit PU may then determine, whether the scanned consumable type SCT matches the consumable type, that is associated to the container slot SL2, into which a consumable container CON has been lastly placed. An association of consumable types to container slots may be provided as a data element TD indicating such an association. The processing unit PU may make use of the data element TD that may be provided by the memory unit M to the processing unit PU.

Mandatory respective orders of the actions of scanning the code as one step and placing a consumable container in a container slot as another step for respective consumable types may be provided as order rules in the form of a data element OR by the memory unit M to the processing unit PU. Thus, the processing unit is operable to determine whether the actions of the one step of scanning the code and the other step of placing the consumable container in the container slots are carried out in order that is mandatory for the specific consumable type, in this example type B.

As previously mentioned, some containers may have a same geometry but may contain different consumable types. Thus, there may be a risk of misplacement since there may be two empty slots of a same geometry and thus the user may place the new container into a wrong empty slot. Since for such containers with specific consumables, the sequence of
1. scanning the code of a consumable container comprising a specific consumable type
2. and then placing the consumable container in a container slot
can be set as a mandatory sequence. Checking that this sequence was complied with ensures that the user may have the container in front of him and take a look at the container when scanning it before placing the container into a slot.

For other containers, where there is for example only one slot with the fitting or proper geometry given in the device, a misplacement is less likely to occur, thus either the action sequence/step sequence of
1. scanning the code of a consumable container comprising a specific consumable type
2. and then placing the consumable container in a container slot
or the action sequence/step sequence of
1. placing the consumable container in a container slot
2. and then scanning the code of a consumable container comprising a specific consumable type
may be allowed. For example, in the case that the container COD and slot SL4 would have to be replaced, misplacement is less likely or unlikely to occur.

Preferably, the memory unit M provides to the processing unit PU for each consumable type a data element indicating at least three different statuses comprising
- a container slot associated with the specific consumable type is empty,
- a container slot associated with the specific consumable type contains a consumable container that has not yet been associated to a code
- a container slot associated with the specific consumable type contains a consumable container that has already been associated to a code.

Such data elements may be comprised within a data element STI indicated in Figure 1.

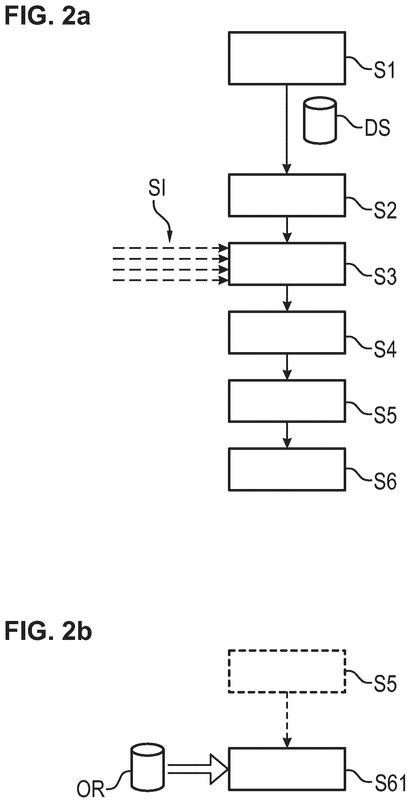

**Fig. 2a** shows a preferred embodiment of a proposed method. In a first step S1, scanning of the code is carried out and the data signal DS indicating the code is provided. In a step S2, different container slots are provided at the laboratory device.

Within step S3, the sensors provide respective sensor signals SI1 , ..., SI4.

Within a step S4, that slot, into which a container has been lastly paced is determined. Within step S5, a scanned consumable type is determined based on the code indicated by the data signal DS by the processing unit. In a step S6, matching of the scanned consumable type and a consumable type associated to the container slot into which a container has been lastly placed is carried out by the processing unit.

To summarize the above: The processing unit is in particular operable to determine/identify based on the sensor signals, into which container slot a consumable container has been lastly placed. Therefore, the processing unit is in particular operable to determine, based on the scanned consumable type and the determined/identified slot, whether the scanned consumable type matches a specific consumable type that is associated with that container slot, into which a consumable container has been lastly placed. In other words: the processing unit is in particular operable to determine directly or indirectly based on the scanned consumable type and based on the sensor signals, whether the scanned consumable type matches a specific consumable type that is associated with that container slot, into which a consumable container has been lastly placed.

**Fig. 2b** shows a preferred embodiment, within which the step S6 is replaced by an alternative step S61. In step S61, in addition to the determination carried out in the step S6 a further determination is carried out. This is the further determination of checking whether the actions of scanning the code and placing the consumable container in a slot are carried out in an order that is mandatory for the scanned consumable type. For this purpose, the step S61 may make use of a data element OR indicating respective orders for respective consumable types.

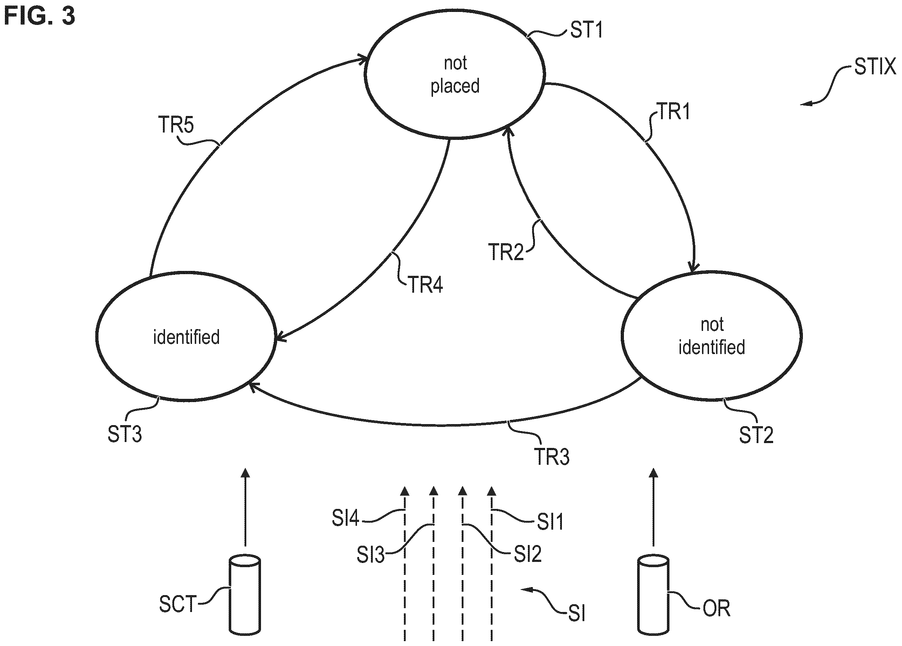

**Fig. 3** shows a preferred embodiment of a status diagram for use in a preferred embodiment of the proposed method. The status diagram STIX indicates different statuses ST1, ST2, ST3 for one specific consumable type; without any limitation, in this example the consumable may be of consumable type X in general. The previously described memory unit may thus be operable to provide for each respective consumable type a respective data element indicating such three different statuses. For all different consumable types, the respective status data may be comprised within a data element STI, as depicted in Fig. 1.

The Fig 3. shows the different statuses only for one specific consumable type X. A person skilled in the art understands that further respective status diagrams with respective statuses may be used for further respective consumable types.

A first status ST1 is preferably called a status "not placed". This status indicates that for the specific consumable type a container slot associated with this consumable type is empty and does not hold a container. A second status ST2 may be called "not identified" and indicates, that the container slot associated with the specific consumable type contains a consumable container that has not yet been associated to a code. In other words, within the container slot a consumable container is present, but it has not yet identified, whether the correct consumable type is associated to this container. In a third status ST3 preferably called "identified", it is indicated that the container slot associated with the specific consumable type contains a consumable container and that this container has already been associated to a code. In other words, this status ST3 indicates that a consumable container is present within the container slot associated with the specific consumable type and that a code has been associated as an indication that the correct consumable type is comprised within the container present in the container slot.

Input to the transition diagram STIX is the data element SCT, which indicates that a code has been scanned and is available. Furthermore, input to the status diagram STIX are the sensor signals SI. Furthermore, input to the status diagram STIX are the order rules OR.

In the following passages, it is outlined under which conditions specific transitions between the different statuses ST1, ST2, ST3 may take place in this example, in particular for ensuring that an order of steps is complied with. For example, one may call the order of first scanning the code and then next in the second step placing the consumable container in the container slot an order called "scan&place". Furthermore, for illustrative purposes, one may call the order of at first placing the consumable container and the container slot and then next in the second step scanning the code of the consumable container an order called "place&scan".

For a first subset of consumable types, for example type A, type B and type C, the "scan& place" order may be mandatory, while for example for the consumable type D both orders "scan&place" as well as "place&scan" may be allowable.

Assuming for example that a replacement of the container COD for the consumable type D and slot SL4 in Fig.1 should take place, and that the slot SL4 is empty, the transition diagram would start at the first status ST1 "not placed". Upon the sensor signal SI4 of the slot SL4 indicating a presence of a container slot SL4, a transition TR1 from the status ST1 to the status ST2 takes place. In the case that the container would be removed again from the slot SL4, the transition TR2 from the status ST2 back to the status ST1 would take place.

Assuming now that a new container is present within the slot SL4 and the status ST2 is the current status, input of the data element SCT indicating a newly scanned and available code may cause a transition TR3 from the status ST2 to the status ST3 under the condition that the case that the procedure called "place&scan" is allowable; if the order "scan&place" would be mandatory, the transition TR3 would not occur. Once the transition TR3 has taken place, within the status ST3 the code and therefore the type of the consumable indicated by the data element SCT is associated to the container placed in the slot SL4.

It may then be determined whether the consumable type indicated by the data element SCT actually matches that consumable type, that is associated with the slot SL4.

A transition from the status ST3 to the status ST1 will occur in the case that a container is removed from the slot SL4, as would be indicated by the respective sensor signal SI4.

The previous explanations have been made for the order called "place&scan", that would be allowable for the consumable type D associated to the slot SL4.

Now one may assume an example in which a placement of a new container within the slot SL2 containing the consumable type B should be carried out and that the order "scan&place" is mandatory for the consumable type B. Upon a placement of the container CON in the slot SL2, indicated by the respective sensor signal SI2, a transition from the first status ST1 would occur via a direct transition TR4 to the status ST3 under two further conditions: i) a previously scanned code has already been indicated via the data element SCT and ii) the order of "scan&place" is allowable for the consumable type B associated to the slot SL2.

The statuses ST1, ST2, ST3 are a function of the sensor signals SI and therefore also indirectly indicate into which slot a container has been lastly placed.

For a person skilled in the art it is clear that the use of a status diagram as indicated in Fig. 3 enables a method in which a processing unit makes is able to determine, based on the scanned consumable type SCT and the sensor signals SI, whether the scanned consumable type matches a specific consumable type associated with the container slot, into which a consumable container has been lastly placed and that furthermore a mandatory order of the steps of scanning the code and placing the consumable container are carried out in a mandatory order.

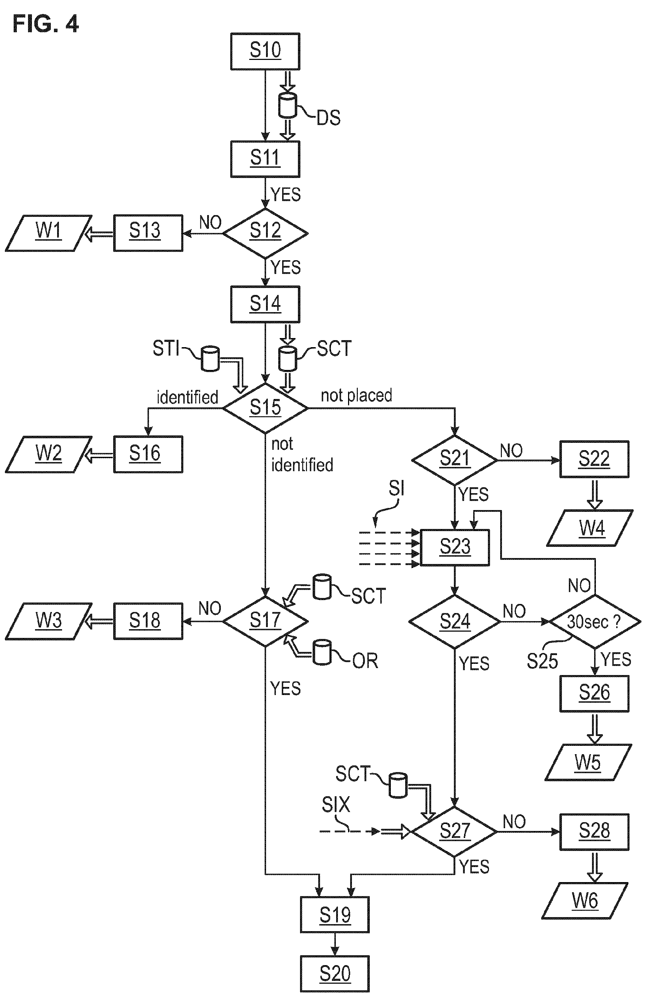

**Fig. 4** shows a further preferred embodiment, within which different steps are outlined for carrying out a preferred embodiment of the proposed method.

The steps illustrated in Fig. 4 correspond to a handling of a status diagram STIX as indicated in Fig. 3.

In a first step S10, the code on the container is scanned and the data signal DS indicating the code is provided. In a next step S11, the code is decoded making use of code data BCD, which may be provided via a memory unit M as indicated in Figure 1.

In a step S12, it may be checked whether the scanned code is a valid code. In the case that the code is not a valid code, transition to a step S13 takes place, within which a warning message W1 may be issued indicating that the code is not a valid code.

In the case, that in step S12 it is determined that the code is a valid code, transition to step S14 takes place. In this step S14, the scanned consumable type is determined based on the code indicated by the data signal DS and then provided as a data element SCT.

In a next step S15, the status for the scanned consumable type is checked. The step S15 uses the further input of the data element STI indicating the statuses for the different consumable types. In the case, that the status for the scanned consumable type is the status "identified" - status ST3 of Fig. 3 - transition to a step S16 occurs. In the step S16 a warning message W2 is issued indicating that a container has at first to be removed from the respective slot for that consumable type before placing a new container in the slot.

In the case, that in S15 it is determined that for the scanned consumable type the status is the "not identified", see status ST2 in Fig. 3, transition takes place to a step S17. Step S17 uses as a further input the data element SCT indicating the scanned consumable type and the data element OR indicating respective mandatory orders for respective consumable types. In the step S17 it is checked whether the order "place&scan" is allowable for the scanned consumable type. In the case that this order is not allowable, transition to the step S18 takes place, within which a warning message W3 may be issued indicating that the container should be removed and that at first the code is to be scanned and that then afterwards placing the container in the slot should be performed.

In the case that in the step S17 it is determined that the order "place&scan" is allowable and that then a newly scanned code is made available in the form of the data element SCT, transition to the step S19 takes place within which the status for this consumable type is set to "identify"; this is equivalent to a transition TR3 from the status ST2 to the status ST3 as shown in Fig. 3.

In step 19, the scanned code is associated to the container in the slot.

From the step S19 transition to the step S20 takes place. In step S20 the method ends and preferably afterwards may be restarted.

The previous explanations from the step S15 down to the steps S19 and S20 were outlined in relation to the allowable order "place&scan". The further explanations now following will relate to the mandatory order "scan&place". In the case, that in step S15 it is determined that the status for the scanned consumable type indicated by the data element SCT is "not placed", equivalent to the status ST1 in Fig. 3, transition to a step S21 takes place. Within the step S21 it is determined whether the order "scan&place" is allowed for the scanned consumable type. In the case that this order is not allowed for the scanned consumable type, transition to the step S22 takes place, within which a warning message W4 may be issued indicating that at first the container has to be placed in the slot and code scanning has to take place afterwards.

In the case that in the step S21 it is determined that the order "scan&place" is authorized and allowable, transition to the step S23 takes place within which the sensor signals SI1, ..., SI4 of all sensors are observed.

Within the next step S24, it is determined whether a change of a sensor signal occurs and therefore indicates a new placement of a container in any slot. In the case that no change of any sensor signal has occurred, transition to step S25 takes place, within which it is checked whether more than 30 seconds have passed from the point of time at which the scanning of the code took place. In the case that more than 30 seconds passed, transition takes place to a step S26, within which a warning message W5 may be issued indicating that the overall procedure ends and is abandoned.

In the case that 30 seconds have not passed yet, back transition to the step S23 takes place and steps S23 and S24 are carried out again.

In the case that in step S24 it is determined that for a sensor signal the change occurred transition to the next step S27 takes place. Within this step S27 the data element SCT indicating the scanned consumable type is considered as well as the sensor signal SIX indicating a change of status relating to a last placement of a container in the respective slot the SIX may be one of the signals SI1, ..., SI4 shown in Fig. 3.

In step S27 it is checked whether the scanned consumable type indicated by the data element SCT matches the consumable type associated with the container slot that in turn is associated to the sensor of the sensor signal indicating a lastly placement of a container. In the case of a mismatch, transition to the step S28 takes place within which a warning message W6 may be issued indicating a placement of a container into a wrong slot. In case of a proper match, transition to the step S19 takes place, within which an association of the code to the container takes place. This is equivalent to a transition directly from the status ST1 to the status ST3 within Figure 3. This change of the status from ST1 to ST3 takes place, since
- a code has already been available,
- since furthermore the "scan&place" order is allowable as previously checked in step S21
- and since furthermore the sensor signal indicated a placement of a container.

Next, within step S19 the scanned code is associated to the container in the respective slot. The procedure then ends in the next following step S20 as previously described or preferably restarts.

To summarize the above, the proposed method is a method, within which a warning message may be issued in the case that the consumable type does not match the specific consumable type associated with the container slot into which a consumable container has been lastly placed; such a message is for example the warning message W6 or the warning message W3 or the warning message W2.

Furthermore, a warning message may be issued in the case that a mandatory order for the actions of scanning the code and placing the consumable container are not carried out in a mandatory order mandatory for the scanned consumable type; such a message is for example the message W4 or the message W3.

Furthermore, it may be determined based on the scanned consumable type and the sensor signal, whether a placement of a consumable container containing the scanned consumable type is allowable and furthermore a proper warning message may be issued; such a message is for example warning message W2 or the message W3.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art and are to be construed as being without limitation to such specifically recited examples and conditions. Moreover, all statements herein reciting principles, aspects, and examples of the invention, as well as specific examples thereof, are intended to encompass equivalents thereof.

Functions of various elements shown in the figures, including any functional blocks may be provided through the use of dedicated hardware, such as "a processing unit", "a controller", etc. as well as hardware capable of executing software in association with appropriate software. Moreover, any entity described herein as functional block, may correspond to or be implemented as "one or more modules", "one or more devices", "one or more units", etc.

When provided by a processing unit, the functions may be provided by a single dedicated processor, by a single shared processor, or by a plurality of individual processors, some of which may be shared. Moreover, explicit use of the term "processing unit" should not be construed to refer exclusively to hardware capable of executing software, and may implicitly include, without limitation, Digital Signal Processor (DSP) hardware, application specific integrated circuit (ASIC), field programmable gate array (FPGA), read only memory (ROM) for storing software, random access memory (RAM), and non-volatile storage. Other hardware, conventional and/or custom, may also be included.

## Claims

1. Laboratory device for processing of patient samples
comprising
- a portable scanning unit (OSC), operable to scan a code (OC) of a consumable container (CO) and furthermore operable to provide a data signal (DS) indicating said code (CO),
- multiple container slots (SL), each of said container slots (SL) operable to hold a respective consumable container (CO) and furthermore each of said container slots (SL) comprising a respective associated sensor (SE),
wherein each container slot (SL) is associated with a specific consumable type, and wherein each sensor (SE) is operable to provide a respective sensor signal (SI) indicating a potential presence of a respective container (CO) in the container slot (SL) associated to the sensor (SE),
furthermore comprising a processing unit (PU) that is operable
- to determine a scanned consumable type based on said code (OC)
- and furthermore to determine, based on said scanned consumable type and said sensor signals (SI), whether said scanned consumable type matches a specific consumable type associated with that container slot (SL2), into which a consumable container (COB) has been lastly placed.

2. Laboratory device according to claim 1,
wherein at least two of said container slots (SL1, SL2, SL3) have a same geometry and wherein said processing unit (PU) is furthermore operable to determine whether the actions of
- scanning said code (OC) of a consumable container (CON) comprising a specific consumable type
- and placing said consumable container (CON) in the container slot (SL2)
are carried out in an order that is mandatory for the scanned consumable type.

3. Laboratory device according to claim 1,
wherein said processing unit (PU) is furthermore operable to issue a warning message (W2; W6) in the case that said scanned consumable type does not match the specific consumable type associated with that container slot (SL2), into which a consumable container (COB) has been lastly placed.

4. Laboratory device according to claim 3,
wherein said processing unit (PU) is furthermore operable to issue a warning message (W4; W3) in the case that the actions of
- scanning said code of a consumable container comprising a specific consumable type
- and placing said consumable container in the container slot
are not carried out in an order that is mandatory for the scanned consumable type.

5. Laboratory device according to claim 1,
wherein said processing unit (PU) is furthermore operable to determine, based on said scanned consumable type and said sensor signals, whether a placement of a consumable container containing said scanned consumable type is allowable.

6. Laboratory device according to claim 5,
wherein said processing unit (PU) is furthermore operable to issue a warning message (W2) in the case that a placement of a consumable container containing said scanned consumable type is not allowable.

7. Laboratory device according to claim 1,
wherein said sensors (SE) are pressure sensors or floating sensors or optical sensors.

8. Laboratory device according to claim 1,
wherein at least two of said container slots (SL1, SL2, SL3) have a same geometry.

9. Laboratory device according to claim 1,
wherein said code (OC) is an identification code.

10. Laboratory device according to claim 1 or 9,
wherein said scanning unit (OSC) is an optical scanning unit and wherein said code (OC) is an optical code readable via said optical scanning unit.

11. Laboratory device according to claim 1 or 9,
wherein said scanning unit (OSC) is a scanning unit using transmission and reception of electromagnetic radiation for reading said code (OC),
wherein said code (OC) is a code element readable via electromagnetic radiation, wherein furthermore said electromagnetic radiation is preferably not visible light.

12. Laboratory device according to claim 11,
wherein said code element is an RFID code element or an NFC code element.

13. Laboratory device according to claim 1,
furthermore comprising a memory unit (M), operable to provide for each consumable type a data element (STI) indicating at least three different statuses comprising
- a container slot associated with the specific consumable type is empty,
- a container slot associated with the specific consumable type contains a consumable container that has not yet been associated to a code
- a container slot associated with the specific consumable type contains a consumable container that has already been associated to a code

14. Method of operating a laboratory device,
comprising the steps of
- scanning a code (OC) of a consumable container (CO) via a portable scanning unit (OSC) by a user,
- providing a data signal (DS) indicating said code (OC),
- providing at said laboratory device (LD) multiple container slots (SL), each of said container slots (SL) operable to hold a respective consumable container (CO) and furthermore each of said container slots (SL) comprising a respective associated sensor (SE),
wherein each container slot (SL) is associated with a specific consumable type,
providing by each sensor (SE) a respective sensor signal (SI) indicating a potential presence of a respective container in the container slot associated to the sensor,
furthermore, by a processing unit (PU),
- determining a scanned consumable type based on said code (OC)
- and determining, based on said scanned consumable type and said sensor signals (SI), whether said scanned consumable type matches a specific consumable type associated with that container slot (SL2), into which a consumable container (COB) has been lastly placed.
